(19) Europäisches Patentamt
European Patent Office
Office européen des brevets

(11) **EP 4 094 829 A1**

(12) **EUROPEAN PATENT APPLICATION**
published in accordance with Art. 153(4) EPC

(43) Date of publication:
**30.11.2022 Bulletin 2022/48**

(21) Application number: **21744438.9**

(22) Date of filing: **20.01.2021**

(51) International Patent Classification (IPC):
**B01J 20/02** *(2006.01)*       **B01J 20/30** *(2006.01)*
**C01C 3/12** *(2006.01)*        **C02F 1/28** *(2006.01)*
**C02F 1/58** *(2006.01)*        **G21F 9/12** *(2006.01)*

(52) Cooperative Patent Classification (CPC):
**B01J 20/02; B01J 20/30; C01C 3/12; C02F 1/28;
C02F 1/58; G21F 9/12**

(86) International application number:
**PCT/JP2021/001879**

(87) International publication number:
**WO 2021/149731 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.01.2020   JP 2020007094
20.01.2020   JP 2020007095**

(71) Applicant: **The University of Tokyo
Bunkyo-ku, Tokyo 113-8654 (JP)**

(72) Inventors:
• **ISHII, Kazuyuki
Tokyo 113-8654 (JP)**
• **ENOMOTO, Kyoko
Tokyo 113-8654 (JP)**

(74) Representative: **Hoffmann Eitle
Patent- und Rechtsanwälte PartmbB
Arabellastraße 30
81925 München (DE)**

(54) **NOVEL ADSORBENT**

(57)    The present invention is to provide a novel adsorbent which is low in cost, has versatility and high adsorption ability. Specifically, the present invention is to provide an adsorbent of a specific metal element containing a metal salt of a cyanometallic acid, a method for producing the same, and a method for removing the ion of the element that is the target of adsorption using such an adsorbent.

EP 4 094 829 A1

**Description**

TECHNICAL FIELD

The present invention relates to a novel adsorbent capable of adsorbing specific metal element ions.

BACKGROUND ART

For the treatment of wastewater, porous materials such as activated carbon and zeolite are commonly used. These are inexpensive and effective in removing organic substances, but have poor absorption ability for metal ions. Therefore, various adsorbents and methods for removing, from wastewater, ions of specific elements, in particular, harmful heavy metal ions and radioactive metal ions, have been studied.

For example, a technique utilizing Prussian blue or analogues thereof as an adsorbent for radioactive cesium ($^{134}$Cs, $^{137}$Cs) has been reported (see, for example, Patent Document 1). According to this document, cesium can be removed from contaminated water by adsorption. However, there have been few reports on the adsorption ability for other elements regarding techniques utilizing Prussian blue or its analogues.

In addition, as adsorbents for radioactive cesium ($^{134}$Cs, $^{137}$Cs) or strontium ($^{90}$Sr), a technique utilizing crystalline silicotitanates that have specific compositions and titanic acid salts has been reported (see, for example, Patent Document 2). However, crystalline silicotitanates and titanic acid salts are expensive and, therefore, not suitable for industrial uses such as treatment of large amounts of wastewater due to their high costs.

PRIOR ART DOCUMENTS

PATENT DOCUMENT

Patent Document 1: JP 2013/27652A
Patent Document 2: JP Patent No. 5,696,244

SUMMARY OF THE INVENTION

PROBLEMS TO BE SOLVED BY THE INVENTION

An object of the present invention is to provide an adsorbent that is low in cost, has versatility and has high adsorption ability.

MEANS TO SOLVE THE PROBLEMS

The present inventors have been carrying out extensive research on adsorption techniques for radioactive cesium utilizing Prussian blue or analogues thereof, that is, metal salts of cyanometallic acids. During the research, they have found that a metal salt of a cyanometallic acid can also adsorb metal element ions other than cesium or strontium efficiently, thereby completing the present invention.

In addition, they have found that, when producing a metal salt of a cyanometallic acid, a reaction of a salt of a cyanometallic acid with a compound containing a metal element carried out in the presence of a water-soluble compound leads to incorporation of the water-soluble compound into the particles of the obtained metal salt of a cyanometallic acid, and that when the counterion of the incorporated water-soluble compound is capable of forming a compound having a low solubility product with an ion of a specific element contained in the wastewater, bringing such particles into contact with the wastewater leads to formation of a compound having a low solubility product, which adsorbs onto the particles of the metal salt of a cyanometallic acid, thereby removing the ion of the specific element contained in the wastewater, etc. Thus, the present invention has been completed.

The present invention is as follows:

(1) An adsorbent for a metal element other than cesium or strontium, the adsorbent comprising a metal salt of a cyanometallic acid.
(2) The adsorbent described in the above (1), wherein the metal element is at least one selected from the group consisting of manganese, iron, cobalt, nickel, zinc, ruthenium, rhodium, barium, lanthanum and cerium.
(3) The adsorbent described in the above (1) or (2), wherein the metal salt of a cyanometallic acid is obtained by a reaction of a salt of a cyanometallic acid and a compound comprising a metal element.

(4) The adsorbent described in the above (3), wherein the reaction is carried out using a porous substance carrying either one of the compound comprising a metal element or the salt of a cyanometallic acid and an aqueous solution of the other, and wherein the metal salt of a cyanometallic acid is formed and fixed inside and outside the porous substance.

(5) The adsorbent described in the above (4), wherein the porous substance is a hydrophilic fiber.

(6) The adsorbent described in any one of the above (1) to (5), wherein the metal salt of a cyanometallic acid is a first-row transition metal salt of a hexacyanometallic acid.

(7) The adsorbent described in the above (6), wherein the first-row transition metal is at least one selected from the group consisting of iron, cobalt, copper and zinc.

(8) A method for removing a metal element other than cesium or strontium from water, comprising a step of bringing the adsorbent described in any one of the above (1) to (7) into contact with an aqueous sample comprising the metal element.

(9) The method described in the above (8), wherein the metal element is at least one selected from the group consisting of manganese, iron, cobalt, nickel, zinc, ruthenium, rhodium, barium, lanthanum and cerium.

(10) The method described in the above (8) or (9), further comprising a step of removing the adsorbent.

Further, the present invention includes the following inventions.

(11) An adsorbent for an ion of an element capable of constituting a compound having a low solubility product, the adsorbent comprising a metal salt of a cyanometallic acid comprising a water-soluble compound capable of supplying a counterion for the ion of the element.

(12) The adsorbent described in the above (11), wherein the metal salt of a cyanometallic acid is a transition metal salt of a hexacyanometallic acid.

(13) The adsorbent described in the above (11) or (12), wherein the compound having a low solubility product is strontium sulfate or barium sulfate.

(14) The adsorbent described in any one of the above (11) to (13), wherein the water-soluble compound capable of supplying a counterion for the ion of the element constituting the compound having a low solubility product is sodium sulfate.

(15) A method for removing, from water, an ion of an element capable of constituting a compound having a low solubility product, the method comprising a step of bringing the adsorbent described in any one of the above (11) to (14) into contact with an aqueous solution comprising the ion of the element to form a compound having a low solubility product.

(16) The method described in the above (15), h further comprising a step of removing the formed compound having a low solubility product along with the adsorbent.

(17) A method for producing an adsorbent for an ion of an element capable of constituting a compound having a low solubility product, comprising a step of forming a metal salt of a cyanometallic acid comprising a water-soluble compound by reacting a salt of a cyanometallic acid with a compound comprising a metal element in the presence of a water-soluble compound, wherein the water-soluble compound supplies a counterion for the ion of the element constituting the compound having a low solubility product.

(18) The method described in the above (17), wherein the metal salt of a cyanometallic acid is a transition metal salt of a hexacyanometallic acid.

(19) The method described in the above (17) or (18), wherein the compound having a low solubility product is strontium sulfate or barium sulfate.

(20) The method described in any one of the above (17) to (19), wherein the water-soluble compound is sodium sulfate.

EFFECTS OF THE INVENTION

The adsorbent of the present invention has high adsorption ability and can target a plural number of harmful metal ions in wastewater including, in addition to cesium and strontium, manganese, iron, cobalt, nickel, zinc, ruthenium, rhodium, barium, lanthanum and cerium, and it is, therefore, excellent in versatility.

Further, the adsorbent of the present invention can be obtained by a reaction of a salt of a cyanometallic acid and a compound containing a metal element in the presence of a water-soluble compound. That is, the metal salt of a cyanometallic acid obtained by the reaction is believed to contain the above-mentioned water-soluble compound. And, when the counterion of the water-soluble compound in the adsorbent is capable of forming a compound having a low solubility product with an ion of the specific element contained in wastewater, etc., bringing such an adsorbent into contact with the wastewater causes ion exchange to occur between an ion of an element in the water-soluble compound in the adsorbent and the ion of the element present in the wastewater, etc. and to be adsorbed, which leads to formation of a compound having a low solubility product, thereby removing the ion of the specific element contained in the wastewater. Accordingly, the adsorbent of the present invention can be designed as appropriate by selecting, depending on the ion of the element present in wastewater and to be adsorbed, a water-soluble compound capable of supplying a counterion that can constitute a compound having a low solubility product with the ion of the element, and, therefore, it is excellent in versatility.

Moreover, the adsorbent of the present invention can be obtained from inexpensive and easily processable materials using a simple and easy production method, and it is, therefore, suitable for industrial uses such as treatment of a large amount of wastewater from an economical point of view, too. Further, since both the metal salt of a cyanometallic acid and the compound having a low solubility product are almost insoluble in water, they can be easily recovered without leaving the adsorbent used in the treatment in the water environment.

BRIEF DESCRIPTION OF THE DRAWING

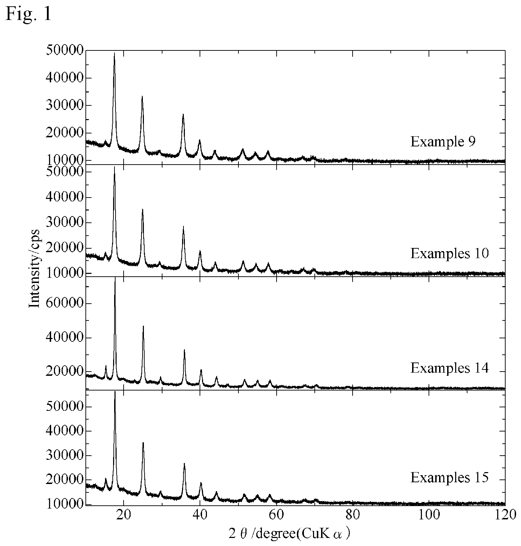

Fig. 1 shows diffraction peaks by powder X-ray diffraction measurement of the adsorbents of Examples 9, 10, 14 and 15 in Test Example 14.

EMBODIMENTS TO CARRY OUT THE INVENTION

[First adsorbent and method for producing the same]

The present invention relates to an adsorbent for a metal element other than cesium or strontium, which comprises a metal salt of a cyanometallic acid (hereinafter also referred to as a "first adsorbent").

(Metal salt of cyanometallic acid)

The metal salt of a cyanometallic acid (also referred to as a "Prussian blue analogue (PBA)") contained in the first adsorbent of the present invention is a type of a cyano bridged metal complex in which a cyanometallic acid ion is used as a constructing element, and is preferably a metal salt of a hexacyanometallic acid or a metal salt of an octacyanometallic acid, and more preferably a metal salt of a hexacyanometallic acid. For example, a metal salt of a hexacyanometallic acid is a compound whose composition is represented by the formula: $M^A_m[M^B(CN)_6]_n \cdot hH_2O$, and is considered to be a face-centered-cubic crystal structure in which the metal ions ($M^A$, $M^B$) are alternately cross-linked with the cyano groups. Here, $M^A$ is preferably a transition metal, and more preferably a first-row transition metal. As the first-row transition metal, there may be mentioned scandium (Sc), titanium (Ti), vanadium (V), chromium (Cr), manganese (Mn), iron (Fe), cobalt (Co), nickel (Ni), copper (Cu) and zinc (Zn). It is preferably manganese (Mn), iron (Fe), cobalt (Co), nickel (Ni), copper (Cu) and zinc (Zn), more preferably , iron (Fe), cobalt (Co), copper (Cu) and zinc (Zn), further preferably iron (Fe), copper (Cu) and zinc (Zn), further more preferably iron (Fe) and copper (Cu), particularly, ferric (Fe(III)) or cupric (Cu(II)). Incidentally, the metal salt of a cyanometallic acid of the present invention may contain a material in which a part of the metal ions (for example, $M^A$) is substituted by an alkali metal ion derived from a starting material.

In the above-mentioned formula, $M^B$ may be any metal species capable of having an octahedral hexacoordination structure, and is preferably chromium (Cr), manganese (Mn), iron (Fe) or cobalt (Co), more preferably iron (Fe), and particularly ferrous (Fe(II)). Incidentally, in the above-mentioned formula, the values of m, n and h are determined depending on the oxidation numbers of $M^A$ and $M^B$.

For example, as the metal salt of the hexacyanoferrate(II), which is one embodiment of the metal salt of a cyanometallic acid of the present invention, there may be mentioned a first-row transition metal salt thereof, and specific examples include a scandium (Sc) salt, titanium (Ti) salt, vanadium (V) salt, chromium (Cr) salt, manganese (Mn) salt, iron (Fe) salt, cobalt (Co) salt, nickel (Ni) salt, copper (Cu) salt, zinc (Zn) salt, and a mixed salt of one kind or two or more kinds thereof. It is preferably a manganese (Mn) salt, iron (Fe) salt, cobalt (Co) salt, nickel (Ni) salt, copper (Cu) salt, or zinc (Zn) salt of hexacyanoferrate(II) or a mixed salt of one kind or two or more kinds thereof, more preferably an iron (Fe) salt, cobalt (Co) salt, copper (Cu) salt and zinc (Zn) salt, further preferably an iron (Fe) salt, copper (Cu) salt and zinc (Zn) salt, further more preferably a copper (Cu) salt or iron (Fe) salt, and particularly a ferric (Fe(III)) salt or cupric (Cu(II)) salt.

The ferric (Fe(III)) salt of hexacyanoferrate(II), which is one embodiment of the metal salt of a hexacyanometallic acid of the present invention, is also referred to as Prussian blue or Berlin blue, and has been used as a pigment for a long time. Its ideal chemical composition is $Fe(III)_4[Fe(II)(CN)_6]_3 \cdot xH_2O$ (x=14 to 16) (that is, "iron(III) hexacyanoferrate(II) hydrate"), and part of the iron ions may, in some cases, be substituted by alkali metal ions, etc., derived from the starting material, depending on the producing method, etc.

(Salt of cyanometallic acid)

The first adsorbent of the present invention can be obtained by the reaction of a salt of a cyanometallic acid with a compound containing a metal element. The reaction is preferably carried out in a theoretical amount. Here, the "theoretical amount" means a molar amount (theoretical amount) of the compound containing a metal element theoretically required for forming the composition of the metal salt of a cyanometallic acid relative to 1 mol of the salt of a cyanometallic acid. For example, when the metal salt of a cyanometallic acid is copper(II) hexacyanoferrate(II), the molar amount of a compound containing Cu(II), for example, copper(II) chloride theoretically required for forming the formula $Cu(II)_2[Fe(II)(CN)_6]$, which is an ideal composition, is 2 mol relative to 1 mol of the salt of a hexacyanometallic acid, which means the amount of 100 mol% of the theoretical amount means an amount of 2 mol. An amount of the compound containing a metal element to be used relative to 1 mol of the salt of a cyanometallic acid may be 100 mol% or more of the theoretical amount, and may be less than 100 mol% of the theoretical amount, preferably 10 mol% or more and 120 mol% or less, more preferably 15 mol% or more and 110 mol% or less, and further preferably 20 mol% or more and 100 mol% or less. Even if the amount of the compound containing a metal element to be used relative to 1 mol of the salt of a cyanometallic acid is less than 100 mol% of the theoretical amount, it is believed to lead to increased defects in the coordination structure of the metal salt of a cyanometallic acid, thereby allowing harmful ions to be adsorbed in the defects or void portions.

The salt of a cyanometallic acid used in the present invention is not particularly limited as long as it is water soluble, and can form a Prussian blue analogue (that is, the metal salt of a cyanometallic acid) of the present invention by reaction with a compound containing a metal element. As examples, there may be mentioned, an alkali metal salt (sodium salt, potassium salt, etc.) of a cyanometallic acid or a hydrate thereof. There may be specifically mentioned an alkali metal salt (sodium salt, potassium salt, etc.) of hexacyanochromic(III) acid, hexacyanomanganese(II) acid, hexacyanoferric(II) acid or hexacyanocobalt(III) acid, or a hydrate thereof.

For example, when the cyanometallic acid is hexacyanoferric(II) acid, the salt of the hexacyanoferric(II) acid used in the present invention is not particularly limited as long as it is water soluble and can form a metal salt of the hexacyanoferric(II) acid by a reaction with a compound containing a metal element. Specific examples thereof include potassium hexacyanoferrate(II), and sodium hexacyanoferrate(II) and a hydrate thereof. Use of potassium hexacyanoferrate(II) or a hydrate thereof is preferable.

(Compound containing metal element)

The compound containing a metal element used in the present invention is not particularly limited as long as it is water soluble, and can form a metal salt of a cyanometallic acid of the present invention by a reaction with a salt of a cyanometallic acid. Examples of such a compound containing a metal element include a halide salt, nitrate salt, sulfate salt, perchlorate salt, acetate salt, phosphate salt, hexafluorophosphate salt, borate salt and tetrafluoroborate salt of a first-row transition metal and hydrates thereof, etc. For example, there may be mentioned halides such as manganese(II) chloride, ferric(III) chloride, cobalt(II) chloride, nickel(II) chloride and copper(II) chloride, etc.; nitrates such as iron(III) nitrate and copper(II) nitrate, etc.; sulfates such as iron(III) sulfate and copper(II) sulfate, etc.; perchlorates such as iron(III) perchlorate, etc.; acetates such as copper(II) acetate and zinc(II) acetate, etc.; or a hydrate thereof.

The first adsorbent of the present invention can be obtained by a reaction of a salt of a cyanometallic acid and a compound containing a metal element. The reaction can be carried out in water by mixing a salt of a cyanometallic acid and a compound containing a metal element in water, and the order of addition thereof is not particularly limited. For example, as shown in Examples described later, it may be carried out by preparing an aqueous solution of a salt of a cyanometallic acid and an aqueous solution of a compound containing a metal element, followed by mixing these.

The concentration of the salt of a cyanometallic acid in the reaction solution may be selected as appropriate depending on the water solubility of the salt of a cyanometallic acid to be used, etc., and, for example, it is selected from the range of 0.001 to 1 M, and in particular, from the range of 0.01 to 0.3 M. Similarly, the concentration of the compound containing a metal element in the reaction solution may be selected as appropriate depending on the water solubility of the compound containing a metal element to be used, etc., and for example, it is selected from the range of 0.001 to 1 M, and in particular, from the range of 0.01 to 0.3 M.

The reaction temperature varies depending on the kind and amount of the starting materials to be used, etc., and it is typically 0°C to 100°C, preferably 10°C to 30°C, and more preferably ambient temperature (about 25°C). The reaction time varies depending on the reaction temperature, etc., and is generally 1 second to 24 hours, and preferably 1 second to 10 minutes. The reaction pressure is set as appropriate depending on necessity, and may be pressurized, depressurized or at atmospheric pressure, preferably at atmospheric pressure. The reaction atmosphere can be selected as appropriate and carried out depending on necessity, and is preferably an air atmosphere or an inert gas atmosphere such as nitrogen or argon, etc.

When the reaction proceeds, an adsorbent containing a metal salt of a cyanometallic acid is precipitated as a solid. After completion of the reaction, the precipitated metal salt of a cyanometallic acid can be isolated and purified by methods known in the art, for example, centrifugation, filtration, decantation, extraction and washing, etc. Further, if necessary, the adsorbent of the present invention can be obtained as a powder by using means such as drying and pulverization, etc.

In addition, the first adsorbent of the present invention may be in the form of being carried on a porous substance. When the adsorbent of the present invention is in the form of being carried on a porous substance, the reaction is carried out using a porous substance that has been prepared to carry either one of the salt of a cyanometallic acid or the compound containing a metal element as well as an aqueous solution of the other, and the reaction is preferably carried out using the porous substance carrying the compound containing a metal element and an aqueous solution of the salt of a cyanometallic acid. By such a reaction, the resulting metal salt of a cyanometallic acid is formed and fixed inside or outside the porous substance. Metal salts of a cyanometallic acid, in particular, "pigments" such as Prussian blue are insoluble in a medium such as water and organic solvents and have no dyeing affinity for a substrate. Therefore, when the adsorbent of the present invention is carried on a porous substance, it is typically necessary to subject it to post-treatment with a binder resin, etc., and to fix the metal salt of a cyanometallic acid in the form of being attached onto the surface of the porous substance. By contrast, in the adsorbent of the present invention, the metal salt of a cyanometallic acid is formed in situ and exists as fine particles on the surface and/or inside of the porous substance, so that it can be stably fixed to the porous substance without using a binder resin, etc.

The porous substance can be optionally selected from known materials such as powders, particles, membranes, foams, woven fabrics, non-woven fabrics, textiles, etc., preferably hydrophilic or water-absorbent powders, particles, membranes, foams, woven fabrics, non-woven fabrics, textile fabric, etc. Examples of the porous substance include hydrophilic inorganic particles such as silica gel, alumina, diatomaceous earth, etc.; and a filter medium using a hydrophilic fiber as a base material (for example, filter paper, membrane filter, porous particles, fiber rod, etc.). The hydrophilic fiber in the present invention may be paraphrased as a water-absorbent fiber. The hydrophilic fiber is a general term for fibers that can easily take in water molecules, and is typically a cellulose fiber. Examples of cellulose fibers include natural fibers such as wool, cotton, silk, linen, pulp, etc., regenerated fiber such as rayon, polynosic, cupra (Bemberg (Registered trademark)), lyocell (Tencel (Registered trademark)), etc., and composite fibers thereof. In addition, it may be semi-synthetic fibers such as acetate, triacetate, etc., or synthetic fibers such as polyamide-based, polyvinyl alcohol-based, polyvinylidene chloride-based, polyvinyl chloride-based, polyester-based, polyacrylonitrile-based, polyolefin-based or polyurethane-based fibers, etc., or those in which these composite fibers are modified by a known method to impart hydrophilicity. In addition, to the extent that it has the desired hydrophilicity, it may be a composite material of hydrophilic fiber and synthetic fiber, for example, a cellulose composite fiber of a cellulose fiber and a synthetic fiber (for example, a polyolefin-based fiber such as polyethylene, polypropylene, etc.). As the hydrophilic fiber, a cellulose fiber or a cellulose composite fiber is preferable in view of price and availability.

[Method for removing metal element(s) from water]

The present invention relates to a method for adsorbing and removing metal element(s) contained in wastewater, etc., specifically, metal elements other than cesium or strontium, and particularly at least one kind selected from the group consisting of manganese, iron, cobalt, nickel, zinc, ruthenium, rhodium, barium, lanthanum and cerium. The method of the present invention includes a step of bringing the above-mentioned adsorbent of the present invention into contact with an aqueous sample containing the metal element that is the target of adsorption, to adsorb the metal element ion to the defects or void portions in the metal salt of a cyanometallic acid contained in the adsorbent. In the present invention, the aqueous sample containing metal elements typically refers to water contaminated with harmful substances such as chemical substances, etc. Examples of chemical substances include harmful metal element ions or compounds capable of releasing such harmful metal element ions. Examples of such metals include magnesium (Mg), aluminum (Al), chromium (Cr), manganese (Mn), iron (Fe), cobalt (Co), nickel (Ni), copper (Cu), zinc (Zn), strontium (Sr), ruthenium (Ru), rhodium (Rh), silver (Ag), cadmium (Cd), tin (Sn), cesium (Cs), barium (Ba), mercury (Hg), thallium (Tl), lead (Pb), lanthanum (La), cerium (Ce) and radioactive isotopes thereof, etc. As the metal element which is an object to be adsorbed, manganese, iron, cobalt, nickel, zinc, ruthenium, rhodium, barium, lanthanum or cerium is suitable. Accordingly, as the aqueous sample containing the metal element that is the object to be adsorbed, there may be mentioned water environments such as contaminated seas, rivers, ponds, lakes, etc., water taken from a contaminated water environment, industrial wastewater, etc.

In the method of the present invention for removing harmful ions which are the objects to be adsorbed from water, subsequent to the above-mentioned step of bringing the adsorbent of the present invention into contact with an aqueous sample containing the metal element that is the target of adsorption, a step of removing the adsorbent may be included. In the method of the present invention, the metal salt of a cyanometallic acid contained in the adsorbent is almost insoluble in water, so that it can be easily recovered without leaving the adsorbent used in the treatment in the aqueous solution by methods known in the art, for example, centrifugation, filtration, decantation, etc.

[Second adsorbent]

The present invention also relates to an adsorbent (hereinafter also referred to as a "second adsorbent") for an ion of an element capable of constituting a compound having a low solubility product, which comprises a metal salt of a cyanometallic acid containing a water-soluble compound capable of supplying a counterion for the above-mentioned ion of the element.

(Compound having low solubility product)

The solubility product (also referred to as "$K_{sp}$") means a product of concentrations of both anions and cations constituting a salt when a difficultly soluble salt is present in a solution. That is, it means a product $[M^+] \cdot [A^-]$ of the concentration $[M^+]$ of $M^+$ and the concentration $[A^-]$ of $A^-$ when the difficultly soluble salt MA is dissociated into $M^+$ and $A^-$ by slightly dissolving in a solvent at a constant temperature. The solubility product of the difficultly soluble salt has been known to show a constant value at a constant temperature, has been published in various kinds of documents, and is known to those skilled in the art. In the present invention, unless otherwise specifically mentioned, it means a solubility product at 25°C (298K). In the present invention, the "compound having a low solubility product" means a compound having a solubility product of $10^{-5}$ or less, preferably $10^{-6}$ or less, and more preferably $10^{-7}$ or less.

In the present invention, the compound having a low solubility product is formed from an ion of an element capable of constituting a compound having a low solubility product and the counterion supplied by the water-soluble compound described later. In the present invention, an "ion of an element capable of constituting a compound having a low solubility product" is an ion of the element that is the target of adsorption. Accordingly, the compound having a low solubility product of the present invention can be appropriately designed from among compounds that contain the element that is the target of adsorption, depending on the ion of the element to be adsorbed, and have a solubility product of $10^{-5}$ or less, preferably $10^{-6}$ or less, and more preferably $10^{-7}$ or less, in consideration of costs and safety, among other factors.

For example, when the ion of the element that is the target of adsorption is a strontium ion ($Sr^{2+}$), known compounds that contain strontium and have a solubility product of $10^{-5}$ or less include strontium carbonate ($K_{sp}=7.0\times10^{-10}$), strontium oxalate ($K_{sp}=5.6\times10^{-8}$), strontium chromate ($K_{sp}=5.0\times10^{-6}$), strontium fluoride ($K_{sp}=7.9\times10^{-10}$), strontium iodate ($K_{sp}=3.3\times10^{-7}$), strontium phosphate ($K_{sp}=1.0\times10^{-31}$) and strontium sulfate ($K_{sp}=7.6\times10^{-7}$) and the like (see, for example, Ion Equilibrium --- in Analytical Chemistry---, coauthored by H. Freiser and Q. Fernando, etc.), and strontium sulfate is preferable from the points of cost and safety of the water-soluble compound which supplies counterions.

Thus, in the second adsorbent of the present invention, the ion of the element that is the target of adsorption is not particularly limited as long as it can constitute a compound having a low solubility product, and is preferably a metal ion, for example, a harmful heavy metal ion or a radioactive metal ion. Examples of such metals include magnesium (Mg), aluminum (Al), chromium (Cr), manganese (Mn), iron (Fe), cobalt (Co), nickel (Ni), copper (Cu), zinc (Zn), strontium (Sr), ruthenium (Ru), rhodium (Rh), silver (Ag), cadmium (Cd), tin (Sn), cesium (Cs), barium (Ba), mercury (Hg), thallium (Tl), lead (Pb), lanthanum (La), cerium (Ce) and radioactive isotopes thereof, etc. A particularly preferable object to be adsorbed is barium or strontium.

(Water-soluble compound)

The water-soluble compound of the present invention is not particularly limited as long as it contains a counterion capable of constituting the compound having a low solubility product with the ion of the element that is the target of adsorption and can be dissolved in water. Examples of such counterions include an arsenic ion ($AsO_4^{3-}$), halide ion ($F^-$, $Cl^-$, $Br^-$, $I^-$), carbonate ion ($CO_3^{2-}$), phosphate ion ($PO_4^{3-}$), sulfate ion ($SO_4^{2-}$), hydroxide ion ($OH^-$), formate ion ($CHO_2^-$), oxalate ion ($C_2O_4^{2-}$), acetate ion ($C_2H_3O_2^-$), sulfide ion ($S^{2-}$), etc. Accordingly, the water-soluble compound of the present invention is a water-soluble salt of these counterions, preferably an alkali metal salt or an alkaline earth metal salt of these counterions, for example, a sodium salt or a potassium salt. A particularly preferable water-soluble compound is sodium sulfate.

(Metal salt of cyanometallic acid)

The second adsorbent of the present invention comprises a metal salt of a cyanometallic acid containing a water-soluble compound. The metal salt of a cyanometallic acid is as described in the first adsorbent as mentioned above.

[Method for producing second adsorbent]

The second adsorbent of the present invention can be obtained by the reaction of a salt of a cyanometallic acid and a compound containing a metal element in the presence of a water-soluble compound, and the water-soluble compound is considered to be contained in the coordination structure of the metal salt of a cyanometallic acid formed by such a reaction.

The salt of a cyanometallic acid and the compound containing a metal element used in the present invention is as described in the first adsorbent as mentioned above.

The second adsorbent of the present invention can be obtained by the reaction of a salt of a cyanometallic acid and a compound containing a metal element in the presence of a water-soluble compound. The reaction is carried out by mixing a water-soluble compound, a salt of a cyanometallic acid, and a compound containing a metal element in water, and the order of addition thereof, etc., is not particularly limited. For example, it may be carried out by preparing an aqueous solution of each starting material in advance and mixing them, or preparing an aqueous solution of two kinds of starting materials (for example, a water-soluble compound and a salt of a cyanometallic acid) and an aqueous solution of the remaining one kind of the starting material (for example, a compound containing a metal element) and mixing them. Furthermore, as shown in Examples mentioned later, it may be carried out by preparing a solution of a salt of a cyanometallic acid and a solution of a compound containing a metal element are prepared using an aqueous solution of a water-soluble compound as a solvent, and mixing them.

A concentration of the salt of a cyanometallic acid in the reaction solution may be appropriately selected depending on the water solubility of the salt of a cyanometallic acid to be used, etc., and as an example thereof, it is selected from the range of 0.001 to 1 M, in particular, from the range of 0.01 to 0.3 M. Similarly, a concentration of the compound containing a metal element may be appropriately selected depending on the water solubility of the compound containing a metal element to be used, etc., and as an example thereof, it is selected from the range of 0.001 to 1 M, in particular, from the range of 0.01 to 0.3 M. In addition, a ratio of the salt of a cyanometallic acid to the compound containing a metal element may be appropriately selected depending on the kinds of the salt of a cyanometallic acid and the compound containing a metal element to be used, etc., and as an example thereof, it is selected from the range of 3 : 1 to 1 : 10

Further, a concentration of the water-soluble compound in the reaction solution may be appropriately selected depending on the water solubility of the water-soluble compound, etc., and as an example thereof, it is selected from the range of 0.1 to 10 M, in particular, from the range of 0.5 to 5 M. In addition, the water-soluble compound is preferably used in an excess amount with respect to the salt of a cyanometallic acid and the compound containing a metal element, and as an example thereof, it is used in an amount selected from the range of 2 times or more, particularly 2 to 100 times based on a total molar amount of the salt of a cyanometallic acid and the compound containing a metal element.

A reaction temperature varies depending on the kind of the starting materials and the amount to be used, etc., and it is typically 0°C to 100°C, preferably 10°C to 30°C, and more preferably the ambient temperature (about 25°C). A reaction time varies depending on the reaction temperature, etc., and is generally 1 second to 24 hours, and preferably 1 second to 10 minutes. A reaction pressure is appropriately set depending on necessity, and may be any of pressurized, depressurized or atmospheric pressure, and preferably atmospheric pressure. A reaction atmosphere can be appropriately selected and carried out depending on necessity, and preferably an air atmosphere or an inert gas atmosphere such as nitrogen or argon, etc.

When the reaction proceeds, a metal salt of a cyanometallic acid containing a water-soluble compound is precipitated as a solid. After completion of the reaction, the precipitated solid can be isolated and purified by known means, for example, centrifugation, filtration, decantation, extraction and washing, etc. Further, if necessary, the adsorbent of the present invention can be obtained as a powder by using means such as drying and pulverization, etc.

[Method for removing the ion of the element that is the target of adsorption from water]

The present invention relates to a method for adsorbing and removing an ion of a specific element contained in wastewater, etc., in particular, a harmful heavy metal ion or a radioactive metal ion. The method of the present invention contains a step of bringing the above-mentioned second adsorbent of the present invention into contact with an aqueous solution containing the ion of the element that is the target of adsorption to form a compound having a low solubility product. In the present invention, the aqueous solution containing the ion of the element that is the target of adsorption typically refers to water contaminated with harmful substances such as chemical substances, etc. Examples of the chemical substances include the above-mentioned ion of the element that is the target of adsorption or compounds capable of releasing such ions of elements. Accordingly, as the aqueous solution containing the ion of the element that is the target of adsorption, there may be mentioned water environments such as contaminated seas, rivers, ponds, lakes, etc., water taken from a contaminated water environment, industrial wastewater, etc. Among these, since the method of using the second adsorbent of the present invention is suitable for adsorbing and removing strontium, as the wastewater, water contaminated with radioactive strontium, that is, water environments such as contaminated seas, rivers, ponds, lakes, etc., contaminated with radioactive strontium, water taken from a water environment contaminated with radioactive strontium, wastewater or groundwater, etc., containing radioactive strontium are targeted.

In the method for removing the ion of the element that is the target of adsorption of the present invention, subsequent to the step of bringing the above-mentioned second adsorbent of the present invention into contact with an aqueous solution containing the ion of the element that is the target of adsorption to form a compound having a low solubility product, a step of removing the formed compound having a low solubility product with the adsorbent may be contained. In the method of the present invention, each of the compounds having a low solubility product formed from the counterions in the metal salt of a cyanometallic acid and the water-soluble compound contained in the adsorbent and the ion of the element that is the target of adsorption is almost insoluble in water, so that it can be easily recovered without leaving the adsorbent after treatment in the aqueous solution by the known means, for example, centrifugation, filtration, decantation, etc.

EXAMPLES

Hereinafter, specific embodiments of the present invention will be shown as Examples, but these are illustrative and are not intended to limit the present invention.

Example 1: Preparation of adsorbent

Using a 2 M sodium sulfate aqueous solution as a solvent, 80 mL of a 0.06 M potassium hexacyanoferrate(II) trihydrate solution was prepared. Similarly, 80 mL of a 0.06 M cupric chloride aqueous solution was prepared using a 2 M sodium sulfate aqueous solution as a solvent. By mixing the prepared two solutions, copper(II) hexacyanoferrate(II) (copper ferrocyanide) containing sodium sulfate was precipitated as a brown solid. After completion of the reaction, the reaction mixture was centrifuged at 4,000 rpm for 10 minutes, and the supernatant was discarded. The solid was washed using a 1% sodium chloride aqueous solution or purified water, and decantation was repeated using a centrifuge. The obtained solid was dried at 50°C under reduced pressure, and then pulverized in a mortar. Again, the solid was washed using purified water, and decantation was repeated using a centrifuge. The obtained solid was dried at 50°C under reduced pressure, then pulverized in a mortar to form a powder, and dried at 50°C under reduced pressure to obtain 1.0 g of an adsorbent.

Test Example 1: Measurement experiment of strontium adsorption ability [Procedure]

(1) Using a strontium standard solution (Sr1000) available from FUJIFILM Wako Pure Chemical Corporation, a 0.6 ppm Sr aqueous solution was prepared.
(2) Into 40 mL of a 0.6 ppm strontium aqueous solution was weighed 5.0 mg of the strontium adsorbent prepared in Example 1, and the mixture was stirred with AS ONE Double-Action Lab Shaker SRR-2 at 150 rpm for 5 hours.
(3) After stirring, the container was centrifuged as it was at 4,000 rpm for 1 hour to precipitate the adsorbent.
(4) The supernatant was separated into another container and allowed to stand overnight to prepare a sample solution.
(5) Each sample solution was measured by ICP-MS (inductively coupled plasma mass spectrometry: SPQ9000 manufactured by Seiko Instruments Inc.). A primary calibration curve was drawn with the values of the counting rates of the standard samples whose concentrations were known and the blank sample (milli-Q water), and the concentration of each sample was determined. It was evaluated by the residual ratio expressed by the following formula. The results are shown in Table 1.

Calculation formula of residual ratio

[Numerical formula 1]

$$\text{Residual ratio } [\%] = C \diagup C_0 \times 100$$

$C_0$: Sr ion concentration [mg/L] in test solution before adsorption operation
$C$: Sr ion concentration [mg/L] in test solution after adsorption operation

[Table 1]

| Sample Lot No. | Residual ratio [%] |
|---|---|
| 1 | 1 > |
| 2 | 1 > |
| 3 | 1 > |

Example 2: Preparation of adsorbent (Cu-PBA)

Eighty mL of a 0.06 M potassium hexacyanoferrate(II) trihydrate aqueous solution was prepared. Similarly, 80 mL of a 0.06 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, about 1 g of an adsorbent was obtained.

Example 3: Preparation of adsorbent (Cu-PBA)

Ten mL of a 0.06 M potassium hexacyanoferrate(II) trihydrate aqueous solution was prepared. Similarly, 10 mL of a 0.12 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, about 1 g of an adsorbent was obtained.

Reference Example 1: Measurement experiment of strontium adsorption ability [Procedure]

(1) Using a strontium standard solution (Sr1000) available from FUJIFILM Wako Pure Chemical Corporation, a strontium aqueous solution of about 0.6 ppm was prepared.
(2) Into 40 mL of the strontium aqueous solution prepared in (1) was weighed and incorporated 5 mg of the adsorbent prepared in Example 2 or 3, and the mixture was stirred with AS ONE Double-Action Lab Shaker SRR-2 at 150 rpm for 5 hours.
(3) After stirring, the container was centrifuged as it was at 4,000 rpm for 1 hour with a KUBOTA desktop small centrifuge model 2410 swing rotor to precipitate the adsorbent.
(4) The supernatant was separated into another container and allowed to stand overnight to prepare a sample solution.
(5) Each sample solution was measured by ICP-MS (inductively coupled plasma mass spectrometry: SPQ9000 manufactured by Seiko Instruments Inc.). A primary calibration curve was drawn with the values of the counting rates of the standard samples whose concentrations were known and the blank sample (ultrapure water), the concentration of each sample was determined, and it was evaluated by the residual ratio. The results are shown in Table 2.

Reference Example 2: Measurement experiment of cesium adsorption ability

In the same procedure as in (1) to (5) of [Procedure] of Reference Example 1 except for changing the strontium standard solution (Sr1000) available from FUJIFILM Wako Pure Chemical Corporation to a cesium standard solution (Cs1000) available from FUJIFILM Wako Pure Chemical Corporation, a measurement experiment of cesium adsorption ability was carried out and each of the adsorbents prepared in Examples 2 and 3 was evaluated by the residual ratio. The results are shown in Table 2.

Test Example 2: Measurement experiment of zinc adsorption ability

In the same procedure as in (1) to (5) of [Procedure] of Reference Example 1 except for changing the strontium standard solution (Sr1000) available from FUJIFILM Wako Pure Chemical Corporation to zinc acetate (anhydrous) available from FUJIFILM Wako Pure Chemical Corporation, a measurement experiment of zinc adsorption ability was carried out and each of the adsorbents prepared in Examples 2 and 3 was evaluated by the residual ratio. The results are shown in Table 2.

Test Example 3: Measurement experiment of barium adsorption ability

In the same procedure as in (1) to (5) of [Procedure] of Reference Example 1 except for changing the strontium standard solution (Sr1000) available from FUJIFILM Wako Pure Chemical Corporation to a barium standard solution (Ba1000) available from FUJIFILM Wako Pure Chemical Corporation, a measurement experiment of barium adsorption ability was carried out and each of the adsorbents prepared in Examples 2 and 3 was evaluated by the residual ratio. The results are shown in Table 2.

Test Example 4: Measurement experiment of manganese adsorption ability

In the same procedure as in (1) to (5) of [Procedure] of Reference Example 1 except for changing the strontium standard solution (Sr1000) available from FUJIFILM Wako Pure Chemical Corporation to manganese(II) chloride tetrahydrate available from FUJIFILM Wako Pure Chemical Corporation, a measurement experiment of manganese adsorption ability was carried out and each of the adsorbents prepared in Examples 2 and 3 was evaluated by the residual ratio. The results are shown in Table 2.

Test Example 5: Measurement experiment of lanthanum adsorption ability

In the same procedure as in (1) to (5) of [Procedure] of Reference Example 1 except for changing the strontium standard solution (Sr1000) available from FUJIFILM Wako Pure Chemical Corporation to lanthanum chloride heptahydrate available from FUJIFILM Wako Pure Chemical Corporation, a measurement experiment of lanthanum adsorption ability was carried out and each of the adsorbents prepared in Examples 2 and 3 was evaluated by the residual ratio. The results are shown in Table 2.

Test Example 6: Measurement experiment of nickel adsorption ability

In the same procedure as in (1) to (5) of [Procedure] of Reference Example 1 except for changing the strontium standard solution (Sr1000) available from FUJIFILM Wako Pure Chemical Corporation to nickel(II) chloride hexahydrate available from FUJIFILM Wako Pure Chemical Corporation, a measurement experiment of nickel adsorption ability was carried out and each of the adsorbents prepared in Examples 2 and 3 was evaluated by the residual ratio. The results are shown in Table 2.

Test Example 7: Measurement experiment of cerium adsorption ability

In the same procedure as in (1) to (5) of [Procedure] of Reference Example 1 except for changing the strontium standard solution (Sr1000) available from FUJIFILM Wako Pure Chemical Corporation to cerium(III) chloride (anhydrous) available from FUJIFILM Wako Pure Chemical Corporation, a measurement experiment of cerium adsorption ability was carried out and each of the adsorbents prepared in Examples 2 and 3 was evaluated by the residual ratio. The results are shown in Table 2.

Test Example 8: Measurement experiment of cobalt adsorption ability

In the same procedure as in (1) to (5) of [Procedure] of Reference Example 1 except for changing the strontium standard solution (Sr1000) available from FUJIFILM Wako Pure Chemical Corporation to a cobalt standard solution (Co1000) available from FUJIFILM Wako Pure Chemical Corporation, a measurement experiment of cobalt adsorption ability was carried out and each of the adsorbents prepared in Examples 2 and 3 was evaluated by the residual ratio. The results are shown in Table 2.

Test Example 9: Measurement experiment of iron adsorption ability

In the same procedure as in (1) to (5) of [Procedure] of Reference Example 1 except for changing the strontium standard solution (Sr1000) available from FUJIFILM Wako Pure Chemical Corporation to an iron standard solution (Fe1000) available from FUJIFILM Wako Pure Chemical Corporation, a measurement experiment of iron adsorption ability was carried out and each of the adsorbents prepared in Examples 2 and 3 was evaluated by the residual ratio. The results are shown in Table 2.

Test Example 10: Measurement experiment of rhodium adsorption ability

In the same procedure as in (1) to (5) of [Procedure] of Reference Example 1 except for changing the strontium standard solution (Sr1000) available from FUJIFILM Wako Pure Chemical Corporation to rhodium(III) chloride trihydrate available from FUJIFILM Wako Pure Chemical Corporation, a measurement experiment of rhodium adsorption ability was carried out and each of the adsorbents prepared in Examples 2 and 3 was evaluated by the residual ratio. The results are shown in Table 2.

Test Example 11: Measurement experiment of ruthenium adsorption ability measurement experiment

In the same procedure as in (1) to (5) of [Procedure] of Reference Example 1 except for changing the strontium standard solution (Sr1000) available from FUJIFILM Wako Pure Chemical Corporation to ruthenium(III) chloride n hydrate (purity 36-44%, calculated to as purity 40%) available from FUJIFILM Wako Pure Chemical Corporation, a measurement experiment of ruthenium adsorption ability was carried out and each of the adsorbents prepared in Examples 2 and 3 was evaluated by the residual ratio. The results are shown in Table 2.

[Table 2]

| | | Residual ratio [%] | | | | | | | | | | | |
|---|---|---|---|---|---|---|---|---|---|---|---|---|---|
| | | Reference Example 1 | Reference Example 2 | Test Example 2 | Test Example 3 | Test Example 4 | Test Example 5 | Test Example 6 | Test Example 7 | Test Example 8 | Test Example 9 | Test Example 10 | Test Example 11 |
| Example 2 | 1:1 | 1> | 1> | 1> | 1> | 1 | 1 | 2 | 2 | 10 | 11 | 22 | 34 |
| Example 3 | 1:2 | 18 | 1> | 9 | 17 | 29 | 3 | 18 | 3 | 50 | 2 | 18 | 66 |

Example 4: Preparation of adsorbent (Mn-PBA)

Twenty mL of a 0.06 M potassium hexacyanoferrate(II) trihydrate aqueous solution was prepared. Similarly, 20 mL of a 0.06 M manganese(II) chloride tetrahydrate aqueous solution was prepared. By mixing the prepared two aqueous solutions, manganese(II) hexacyanoferrate(II) (Mn-PBA) was precipitated as a white solid After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a HITACHI High-speed Micro Centrifuge type CF15RXII, at 11,000 rpm. During this washing, drying at 50°C under reduced pressure or pulverization in a mortar was sometimes carried out to the washed solid. After these operations, an adsorbent was obtained.

Example 5: Preparation of adsorbent (Ni-PBA)

Twenty mL of a 0.06 M potassium hexacyanoferrate(II) trihydrate aqueous solution was prepared. Similarly, 20 mL of a 0.06 M nickel(II) chloride hexahydrate aqueous solution was prepared. By mixing the prepared two aqueous solutions, nickel(II) hexacyanoferrate(II) (Ni-PBA) was precipitated as a light blue solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a HITACHI High-speed Micro Centrifuge type CF15RXII, 11,000 rpm. During this washing, drying at 50°C under reduced pressure or pulverization in a mortar was sometimes carried out to the washed solid. After these operations, an adsorbent was obtained.

Example 6: Preparation of adsorbent (Co-PBA)

Twenty mL of a 0.06 M potassium hexacyanoferrate(II) trihydrate aqueous solution was prepared. Similarly, 20 mL of a 0.06 M cobalt(II) chloride hexahydrate aqueous solution was prepared. By mixing the prepared two aqueous solutions, cobalt(II) hexacyanoferrate(II) trihydrate (Co-PBA) was precipitated as a dark green solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a HITACHI High-speed Micro Centrifuge type CF15RXII, 11,000 rpm. During this washing, drying at 50°C under reduced pressure or pulverization in a mortar was sometimes carried out to the washed solid. After these operations, an adsorbent was obtained.

Example 7: Preparation of adsorbent (Zn-PBA)

Twenty mL of a 0.06 M potassium hexacyanoferrate(II) trihydrate aqueous solution was prepared. Similarly, 20 mL of a 0.06 M zinc acetate (anhydrous) aqueous solution was prepared. By mixing the prepared two aqueous solutions, zinc(II) hexacyanoferrate(II) (Zn-PBA) was precipitated as a white solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a HITACHI High-speed Micro Centrifuge type CF15RXII, 11,000 rpm. During this washing, drying at 50°C under reduced pressure or pulverization in a mortar was sometimes carried out to the washed solid. After these operations, an adsorbent was obtained.

Reference Example 3: Measurement experiment of strontium adsorption ability

In the same procedure as in (1) to (5) of [Procedure] of Reference Example 1, a measurement experiment of strontium adsorption ability was carried out, and each of the adsorbents prepared in Examples 5 to 7 was evaluated by the residual ratio. The results are shown in Table 3.

[Table 3]

| Sample | Residual ratio [%] |
| --- | --- |
| Example 5 Ni-PBA | 70 |
| Example 6 Co-PBA | 58 |
| Example 7 Zn-PBA | 1> |

Reference Example 4: Measurement experiment of cesium adsorption ability

In the same procedure as in Reference Example 2, a measurement experiment of cesium adsorption ability was carried out and each of the adsorbents prepared in Examples 4 to 7 was evaluated by the residual ratio. The results are shown in Table 4.

[Table 4]

| Sample | Residual ratio [%] |
| --- | --- |
| Example 4 Mn-PBA | 3 |
| Example 5 Ni-PBA | 1> |
| Example 6 Co-PBA | 1> |
| Example 7 Zn-PBA | 1> |

Test Example 12: Measurement experiment of barium adsorption ability

In the same procedure as in Test Example 3, a measurement experiment of barium adsorption ability was carried out, and each of the adsorbents prepared in Examples 5 to 7 was evaluated by the residual ratio. The results are shown in Table 5.

[Table 5]

| Sample | Residual ratio [%] |
| --- | --- |
| Example 5 Ni-PBA | 39 |
| Example 6 Co-PBA | 7 |
| Example 7 Zn-PBA | 1> |

Example 8: Preparation of adsorbent (Cu-PBA) (Potassium hexacyanoferrate(II) : copper(II) chloride = 3 : 1)

Ten mL of a 0.18 M potassium hexacyanoferrate(II) trihydrate aqueous solution was prepared. Similarly, 10 mL of a 0.06 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, an adsorbent was obtained.

Example 9: Preparation of adsorbent (Cu-PBA) (Potassium hexacyanoferrate(II) : copper(II) chloride = 2 : 1)

Ten mL of a 0.12 M potassium hexacyanoferrate(II) trihydrate aqueous solution was prepared. Similarly, 10 mL of a 0.06 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, an adsorbent was obtained.

Example 10: Preparation of adsorbent (Cu-PBA) (Potassium hexacyanoferrate(II) : copper(II) chloride = 1 : 1)

Ten mL of a 0.06 M potassium hexacyanoferrate(II) trihydrate aqueous solution was prepared. Similarly, 10 mL of a 0.06 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, an adsorbent was obtained.

Example 11: Preparation of adsorbent (Cu-PBA) (Potassium hexacyanoferrate(II) : copper(II) chloride = 1 : 1.5)

Ten mL of a 0.06 M potassium hexacyanoferrate(II) trihydrate aqueous solution was prepared. Similarly, 10 mL of a 0.09 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, an adsorbent was obtained.

Example 12: Preparation of adsorbent (Cu-PBA) (Potassium hexacyanoferrate(II) : copper(II) chloride = 1 : 1.67)

Ten mL of a 0.06 M potassium hexacyanoferrate(II) trihydrate aqueous solution was prepared. Similarly, 10 mL of a 0.10 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, an adsorbent was obtained.

Example 13: Preparation of adsorbent (Cu-PBA) (Potassium hexacyanoferrate(II) : copper(II) chloride = 1 : 1.83)

Ten mL of a 0.06 M potassium hexacyanoferrate(II) trihydrate aqueous solution was prepared. Similarly, 10 mL of a 0.11 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, an adsorbent was obtained.

Example 14: Preparation of adsorbent (Cu-PBA) (Potassium hexacyanoferrate(II) : copper(II) chloride = 1 : 2)

Ten mL of a 0.06 M potassium hexacyanoferrate(II) trihydrate aqueous solution was prepared. Similarly, 10 mL of a 0.12 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, an adsorbent was obtained.

Example 15: Preparation of adsorbent (Cu-PBA) (Potassium hexacyanoferrate(II) : copper(II) chloride = 1 : 3)

Ten mL of a 0.06 M potassium hexacyanoferrate(II) trihydrate aqueous solution was prepared. Similarly, 10 mL of a 0.18 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, an adsorbent was obtained.

Example 16: Preparation of adsorbent (Cu-PBA) (Potassium hexacyanoferrate(II) : copper(II) chloride = 1 : 4)

Ten mL of a 0.06 M potassium hexacyanoferrate(II) trihydrate aqueous solution was prepared. Similarly, 10 mL of a 0.24 M copper(II) chloride aqueous solution was prepared. By mixing the prepared two aqueous solutions, copper(II) hexacyanoferrate(II) (copper ferrocyanide: Cu-PBA) was precipitated as a brown solid. After completion of the reaction, the reaction mixture was centrifuged at 4,000 rpm for 10 minutes with a KUBOTA desktop small centrifuge 2410 swing rotor, and the supernatant was discarded. The solid was washed with a 1% sodium chloride aqueous solution or purified water, and decantation and washing were repeated 22 times or more using a centrifuge. During this washing, drying at 50°C under reduced pressure or pulverization in a mortar was sometimes carried out to the washed solid. After these operations, an adsorbent was obtained.

Reference Example 5: Measurement experiment of strontium adsorption ability

In the same procedure as in (1) to (5) of [Procedure] of Reference Example 1, a measurement experiment of strontium adsorption ability was carried out and each of the adsorbents prepared in Examples 8 to 16 was evaluated by the residual ratio. The results are shown in Table 6.

[Table 6]

|  | Example 8 | Example 9 | Example 10 | Example 11 | Example 12 | Example 13 | Example 14 | Example 15 | Example 16 |
|---|---|---|---|---|---|---|---|---|---|
| Residual ratio [%] | >1 | >1 | >1 | >1 | >1 | 3 | 15 | 15 | 15 |

Test Example 13: Quantification of iron and copper

[Procedure]

(1) Aluminum foil was screwed to the platen, and the adsorbents of Examples 2 and 3 were fixed thereon with silver paste, respectively.
(2) Each sample was measured for iron and copper with XPS (X-ray photoelectron spectrometer: PHI Quantera SXM manufactured by ULVAC-PHI Inc.).
(3) After completion of the measurement, analysis was carried out by MultiPac manufactured by ULVAC-PHI Inc. The results of the obtained atomic compositional ratio (Atomic Concentration) are shown in Table 7.

[Table 7]

| | Atomic Concentration, three-point average (%) | |
|---|---|---|
| $K_4[Fe(CN)_6]$ concentration : $CuCl_2$ concentration | Iron Fe | Copper Cu |
| 1 : 1 | 70 | 30 |
| 1 : 2 | 59 | 41 |

Test Example 14: Powder X-ray diffraction measurement

The adsorbent of Example 9, 10, 14 or 15 was filled in a glass holder as a sample, and measurement was carried out with a centralized optical system using a fully automatic horizontal multipurpose X-ray diffractometer of Rigaku Corporation. The results are shown in Fig. 1.
In the adsorbents of Examples 9, 10, 14 and 15, diffraction peaks were observed at the same positions in either of these. These diffraction peaks were the same as the crystal phase of Prussian blue (ICDD 00-052-1907), so that it could be found that these were cubic.

Test Example 15: Measurement experiment of strontium adsorption ability in environmental water (simulated groundwater)

Using a strontium standard solution (1.0 g/L), a calcium standard solution (1.0 g/L), a magnesium standard solution (1.0 g/L) and a sodium standard solution (1.0 g/L) available from FUJIFILM Wako Pure Chemical Corporation, simulated groundwater (strontium 1 ppm, calcium 30 ppm, sodium 14 ppm and magnesium 8 ppm) was prepared.
Each 30 mL of the prepared simulated groundwater was added to each of the five centrifuge tubes, and 50 mg, 100 mg, 200 mg, 400 mg or 800 mg of the adsorbent of Example 1 was added thereto, and the mixture was shaken at a shaking width of 5 cm and a rotation speed of 150 rpm for 5 hours. After completion of the shaking, each centrifuge tube was centrifuged at room temperature at a rotation speed of 4,000 rpm for 60 minutes. 20 mL of the supernatant after centrifugation was taken in another centrifuge tube, and allowed to stand at room temperature for 24 hours. 15 mL of the supernatant after allowing to stand was taken in another centrifuge tube, and this was made a pretreatment solution.
The test solution which was appropriately diluted with ultrapure water and added with nitric acid to a concentration of about 0.6% was introduced into an ICP mass spectrometer (quadrupole ICP mass spectrometer Agilent 7500cx manufactured by Agilent Technologies), and quantitative analysis of strontium was carried out and evaluation was carried out by the residual ratio. The results are shown in Table 8.

[Table 8]

| Sample weight [mg] | Residual ratio [%] |
|---|---|
| 50 | 37 |
| 100 | 11 |
| 200 | 2 |
| 400 | 1> |

(continued)

| Sample weight [mg] | Residual ratio [%] |
|---|---|
| 800 | 1> |

Test Example 16: Measurement experiment of strontium adsorption ability in environmental water (simulated groundwater)

Using a strontium standard solution (1.0 g/L), a calcium standard solution (1.0 g/L), a magnesium standard solution (1.0 g/L) and a sodium standard solution (1.0 g/L) available from FUJIFILM Wako Pure Chemical Corporation, simulated groundwater (strontium 1 ppm, calcium 30 ppm, sodium 14 ppm and magnesium 8 ppm) was prepared.
Each 30 mL of the prepared simulated groundwater was added to each of the four centrifuge tubes, and 50 mg, 100 mg, 200 mg or 400 mg of the adsorbent of Example 2 was added thereto, and the mixture was shaken at a shaking width of 5 cm and a rotation speed of 150 rpm for 5 hours. After completion of the shaking, each centrifuge tube was centrifuged at room temperature at a rotation speed of 4,000 rpm for 60 minutes. 20 mL of the supernatant after centrifugation was taken in another centrifuge tube, and allowed to stand at room temperature for 24 hours. 15 mL of the supernatant after allowing to stand was taken in another centrifuge tube, and this was made a pretreatment solution.
The test solution which was appropriately diluted with ultrapure water and added with nitric acid to a concentration of about 0.6% was introduced into an ICP mass spectrometer (quadrupole ICP mass spectrometer Agilent 7500cx manufactured by Agilent Technologies), and quantitative analysis of strontium was carried out and evaluation was carried out by the residual ratio. The results are shown in Table 9.

[Table 9]

| Sample weight [mg] | Residual ratio [%] |
|---|---|
| 50 | 28 |
| 100 | 10 |
| 200 | 2 |
| 400 | 1> |

UTILIZABILITY IN INDUSTRY

The adsorbent of the present invention has high adsorption ability, and can target a plural number of harmful metal ions in wastewater not only cesium and strontium, but also manganese, iron, cobalt, nickel, zinc, ruthenium, rhodium, barium, lanthanum and cerium, so that it is excellent in versatility.
The adsorbent of the present invention was also able to efficiently remove strontium from an aqueous solution. The adsorbent of the present invention can be produced, depending on the ion of the element that is the target of adsorption, by selecting a water-soluble compound capable of supplying counterions which can constitute a compound having a low solubility product with such element ions, and incorporating it into inside the structure of a metal salt of a cyanometallic acid by the reaction of a salt of a cyanometallic acid and a compound containing a metal element, so that it is excellent in versatility. In addition, the starting materials of the adsorbent are each inexpensive and production thereof is easy, so that it is also suitable for industrial use such as treatment of a large amount of wastewater.

**Claims**

1. An adsorbent for a metal element other than cesium or strontium, the adsorbent comprising a metal salt of a cyanometallic acid.

2. The adsorbent according to claim 1, wherein the metal element is at least one selected from the group consisting of manganese, iron, cobalt, nickel, zinc, ruthenium, rhodium, barium, lanthanum and cerium.

3. The adsorbent according to claim 1 or 2, wherein the metal salt of a cyanometallic acid is obtained by a reaction of a salt of a cyanometallic acid and a compound comprising a metal element.

4. The adsorbent according to claim 3, wherein the reaction is carried out using a porous substance carrying either one of the compound comprising a metal element or the salt of a cyanometallic acid and an aqueous solution of the other, and wherein the metal salt of a cyanometallic acid is formed and fixed inside and outside the porous substance.

5. The adsorbent according to claim 4, wherein the porous substance is a hydrophilic fiber.

6. The adsorbent according to any one of claims 1 to 5, wherein the metal salt of a cyanometallic acid is a first-row transition metal salt of a hexacyanometallic acid.

7. The adsorbent according to claim 6, wherein the first-row transition metal is at least one selected from the group consisting of iron, cobalt, copper and zinc.

8. A method for removing a metal element other than cesium or strontium from water, comprising a step of bringing the adsorbent according to any one of claims 1 to 7 into contact with an aqueous sample comprising the metal element.

9. The method according to claim 8, wherein the metal element is at least one selected from the group consisting of manganese, iron, cobalt, nickel, zinc, ruthenium, rhodium, barium, lanthanum and cerium.

10. The method according to (8) or (9) above, further comprising a step of removing the adsorbent.

Fig. 1

**INTERNATIONAL SEARCH REPORT**

| International application No. |
| --- |
| PCT/JP2021/001879 |

### A. CLASSIFICATION OF SUBJECT MATTER

B01J 20/02(2006.01)i; B01J 20/30(2006.01)i; C01C 3/12(2006.01)i; C02F 1/28(2006.01)i; C02F 1/58(2006.01)i; G21F 9/12(2006.01)i
FI: B01J20/02 A ZAB; B01J20/30; C02F1/28 A; C02F1/58 J; G21F9/12 501B; G21F9/12 501J; C01C3/12

According to International Patent Classification (IPC) or to both national classification and IPC

### B. FIELDS SEARCHED

Minimum documentation searched (classification system followed by classification symbols)
B01J20/02; B01J20/30; C01C3/12; C02F1/28; C02F1/58; G21F9/12

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | US 5407889 A (COMPOMET CANTEC) 18 April 1995 (1995-04-18) claims, column 2, line 33 to column 3, line 19, examples 1-17, column 5, line 50 to column 6, line 18 | 1-3, 6-9<br>4-10 |
| Y | WO 2013/027652 A1 (THE FOUNDATION FOR THE PROMOTION OF INDUSTRIAL SCIENCE) 28 February 2013 (2013-02-28) claims, paragraphs [0024], [0038] | 4-10 |

☐ Further documents are listed in the continuation of Box C. ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 March 2021 (23.03.2021) | 06 April 2021 (06.04.2021) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

INTERNATIONAL SEARCH REPORT

Information on patent family members

International application No.

PCT/JP2021/001879

| Patent Documents referred in the Report | Publication Date | Patent Family | Publication Date |
|---|---|---|---|
| US 5407889 A | 18 Apr. 1995 | WO 1993/012876 A1<br>EP 575612 A1<br>CA 2101261 A1 | |
| WO 2013/027652 A1 | 28 Feb. 2013 | US 2014/0194665 A1<br>claims, paragraphs<br>[0046], [0066]<br>EP 2765580 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013027652 A

- JP 5696244 B